# EUROPÄISCHE PATENTSCHRIFT

(11) **EP 0 575 929 B1**
(45) Veröffentlichungstag und Bekanntmachung des Hinweises auf die Patenterteilung: **21.05.1997**
(21) Anmeldenummer: 93109853.7
(22) Anmeldetag: 21.06.1993
(51) Int. Cl.: A01K 1/00, A01K 89/00, B65H 75/40, G05G 1/08

(54) **Griff für eine oder an einer Kurbel einer Angelrolle**
Handle for or on a crank for a fishing reel
Bouton d'une ou à une manivelle pour moulinet de pêche

(30) Priorität: 25.06.1992 DE 4220781; 25.06.1992 DE 9208485 U
(43) Veröffentlichungstag der Anmeldung: 29.12.1993
(73) Patentinhaber: D.A.M. DEUTSCHE ANGELGERÄTE MANUFAKTUR HELLMUTH KUNTZE GMBH & CO. KG, 91710 Gunzenhausen (DE)
(72) Erfinder: Brozio, Gerard, D-4993 Rahden 1 (DE)
(74) Vertreter: Richter, Bernhard, Dipl.-Ing.

(56) Entgegenhaltungen:
- DE-C- 211 618
- FR-A- 2 474 853
- GB-A- 352 896
- LU-A- 33 337
- US-A- 4 117 568

## Beschreibung

Die Erfindung betrifft einen Griff für eine oder an einer Kurbel einer Angelrolle, wobei der Griff um seine eigene Längsachse drehbar am Kurbelarm angebracht oder anbringbar ist (Oberbegriff des Anspruches 1).

Kurbeln sind allgemein bekannt und seit vielen Jahren im Einsatz, und zwar auch bei Angelrollen. Sie bestehen aus einem Kurbelarm, der einerseits mit dem zu kurbelnden Teil der Angelrolle verbunden ist, und ferner aus einem am Kurbelarm angebrachten Kurbelgriff, der um seine eigene Längsachse drehbar ist. Hierzu kennt man Kurbeln mit verschieden ausgeformten Kurbelgriffen. Bekannte Kurbelgriffe (beispielsweise DE-OS 1945 137, FR 1300841, FR 1245007, US 32 96 731, US 2775 418 und DE 2421879) bestehen aus Kunststoff oder Holz und weisen die verschiedensten Formen auf. Die Kurbelgriffe sind direkt oder indirekt auf einem Lagerstift, der einseitig starr mit dem Kurbelarm verbunden ist, gelagert und können sich somit ausschließlich um die eigene Längsachse herumdrehen, andere Bewegungen sind nicht möglich. Bei üblichen Angelrollen befindet sich der Lagerstift im Ende des Kurbelarmes und ist von einem Zylinder umgeben, der die verschiedensten Formen haben kann. Bei der Fliegenrolle befindet sich der Lagerstift direkt am Rand der Schnurspule und ist allgemein von einem Zylinder umgeben. Da die Griffe der o.g. Angelrollen starr an der Kurbel bzw. an der Schnurrolle montiert sind, ergibt sich daraus ein Problem anatomischer Art:

Beim Drehen der Kurbel halten die Finger (Zeigefinger und Daumen) den Griff druckvoll zusammen, so daß der Bewegungsausgleich zwangsläufig aus dem Handgelenk kommen muß, was Zerrungen und Verspannungen im Handgelenk zur Folge haben kann. Außerdem entstehen Torsionsbelastungen der Haut auf der Berührungsfläche der Fingerkuppen mit den Auflagen. Dies konnte bisher nur über die Handgelenke ausgeglichen werden. Ist das Handgelenk erst einmal verspannt, so läßt sich auch der Köder nicht mehr gleichmäßig führen. Die Folge ist dann, daß der Angler nach einer bestimmten Zeit ermüdet.

Aus LU-A-33337 ist eine Handkurbel bekannt, die in sich abgewinkelt ist. Die mit dem Kurbelarm einstückige Abwinkelung ist an ihrem Ende mit einem Knauf versehen. Dieser Knauf wird vom Benutzer in der Hand gehalten und ist zu der Abwinkelung der Kurbel drehbar. Hierzu besitzt die Abwinkelung an ihrem in den Knauf einzuführenden Ende eine abgerundete Verdickung, welche in eine entsprechende Ausnehmung des aus elastischem Werkstoff bestehenden Knaufes einschnappt. Die o.g. Abwinkelung ist in einer zylindrischen Bohrung des Knaufes geführt und besitzt davon einen sehr geringen, spaltförmigen Abstand, der das o.g. Drehen des Knaufes zur Abwinkelung um deren Längsachse ermöglicht. Eine Angabe über das Einsatzgebiet dieser Handkurbel ist der vorgenannten Literaturstelle nicht zu entnehmen.

Die Aufgabe der vorliegenden Erfindung ist es daher, einen Griff für eine Kurbel einer Angelrolle so auszugestalten, daß Zerrungen und Verspannungen im Handgelenk, sowie die o.g. Torsionsbelastungen vermieden und eine gleichmäßige Führung eines künstlichen Köders auch über einen längeren Zeitraum ermöglicht werden.

Diese Aufgabenstellung wird erfindungsgemäß dadurch gelöst, daß der Griff Auflagen für die Finger aufweist, die über eine kugelförmige Lagerung mit dem Griff zu allen Seiten hin so schwenkbeweglich verbunden sind, daß dies einen Bewegungsausgleich beim Betätigen der Kurbel von Hand ermöglicht (Kennzeichen des Anspruches 1). Da das Handgelenk jetzt nicht mehr dem Bewegungsablauf des Griffes, sondern die Auflage oder die Auflagen des Griffes dem Bewegungsablauf des Handgelenkes folgt bzw. folgen, ist durch die Erfindung ein Bewegungsausgleich beim Betätigen der Kurbel von Hand gegeben. Die vorgenannte Beweglichkeit der Auflagen zum Griff aufgrund der kugelförmigen Lagerung ergibt auch den Vorteil, daß diese schwenkbeweglichen Auflagen um ihre Mittelachse zum Griff drehbar sind und somit beim Kurbeln durch die Bedienungsperson dieses Drehen um ihre Mittelachse zusätzlich zu der seitlichen Schwenkbeweglichkeit durchführen können. Dies weicht wesentlich vom Gegenstand der Literaturstelle LU-A-33337 ab, da dort die Abwinkelung der Handkurbel mit deren Kurbelarm einstückig ist und daher sich nicht um ihre Längsachse verdrehen kann. Somit sind die vorgenannten Effekte und Vorteile der Erfindung beim Gegenstand von LU-A-33337 nicht erreichbar. Der künstliche Köder kann sehr gleichmäßig und ruhig geführt werden, was erfahrene Angler sicherlich zu schätzen wissen werden. Da der Bewegungsablauf sehr harmonisch verläuft, tritt eine Ermüdung des Handgelenkes auch erst wesentlich später auf als bei einem bekannten, konventionellen Kurbelgriff. Torsionsbelastungen der Haut an der Berührungsfläche der Fingerkuppen mit den Auflagen sind vermieden.

In einer vorteilhaften Ausführung der Erfindung gemäß Anspruch 2 besteht die Lagerung zwischen den Auflagen für die Finger und dem Kurbelgriff aus einem kugelförmigen Teil und einem zu diesem Teil passenden, ihn teilweise umgebenden kugelförmigen Lager oder Bett. Diese Anordnung zeichnet sich durch ihren einfachen und kompakten Aufbau aus. Auch erlaubt sie eine im Sinne der Erfindung große Schwenkbeweglichkeit zwischen den Auflagen und dem Griff.

Gemäß Anspruch 3 sind die Auflagen als zum Griff separate Bauteile um eine Achse zum Griff drehbar, die zu den Auflageflächen der Auflagen senkrecht verläuft. Auch diese Anordnung ist konstruktiv und insbesondere funktionell, d.h. in der Handhabung von Vorteil.

Gemäß Anspruch 4 sind die Auflagen mit einer Kugel verbunden und der Griff besitzt ein Kugellager. Die Kugel ist im Kugellager gehalten und darin gemäß Anspruch 1 zu allen Seiten schwenkbeweglich positioniert.

Gemäß Anspruch 5 sind bei der Ausführung nach Anspruch 2 zwei Auflagen vorgesehen und jeweils mit der Kugel fest verbunden.

Gemäß Anspruch 6 kann die Anordnung so getroffen sein, daß die Auflagen für die Finger ein kugelförmiges Bett aufweisen, und daß der Griff eine Kugel oder einen Kugelkopf besitzt, der in dem Kugelbett derart gehalten ist, daß das kugelförmige Bett zur Kugel oder zum kugelartigen Kopf zu allen Seiten schwenkbeweglich positioniert ist. Somit ergibt sich ebenfalls eine Schwenkbeweglichkeit der Auflagen zum Griff nach allen Seiten hin und ferner die erläuterte Drehbarkeit der Auflagen um ihre Mittelachse.

Eine besonders vorteilhafte Ausführungsform der Erfindung besteht gemäß Anspruch 7 darin, daß zwei Auflagen mit ihren kugelförmigen Betten zueinander hin gerichtet sind und daß sich die Kugel oder der kugelartige Kopf zwischen diesen beiden Betten, darin passend, befindet und daß ferner die beiden Auflagen miteinander verbunden sind. Hierzu kann gemäß einer weiteren vorteilhaften Ausführung des Anspruches 8 vorgesehen sein, daß die beiden Auflagen ringförmig verlaufende Kugelbetten und dazwischen ihrer Verbindung dienende Ansätze aufweisen und daß die Kugel oder der kugelartige Kopf eine von den Ansätzen durchsetzte Bohrung aufweist und sich innerhalb eines sie tragenden Knebelrahmens befindet. Dieser Knebelrahmen bildet den Griff oder ist mit diesem verbunden.

Weitere Merkmale und Vorteile der Erfindung sind sowohl den weiteren Unteransprüchen, als auch der nachfolgenden Beschreibung und der zugehörigen Zeichnung von erfindungsgemäßen Ausführungsmöglichkeiten zu entnehmen. In der Zeichnung zeigt:
- Fig. 1:: die prinzipielle Darstellung einer Angelrolle mit Kurbelarm und Griff nach der Erfindung,
- Fig. 2:: ein erstes Ausführungsbeispiel der Erfindung in einem Längsschnitt durch den Griff und einen Teil des Kurbelarmes der Ausführung nach Fig. 1,
- Fig. 3:: in der Draufsicht ein weiteres Ausführungsbeispiel der Erfindung,
- Fig. 4 und 5:: Schnitte gemäß der Linie A-B in Fig. 3 bei verschiedenen Schwenklagen der Fingerauflagen.
- Fig. 6:: eine weitere Ausführung der Erfindung.

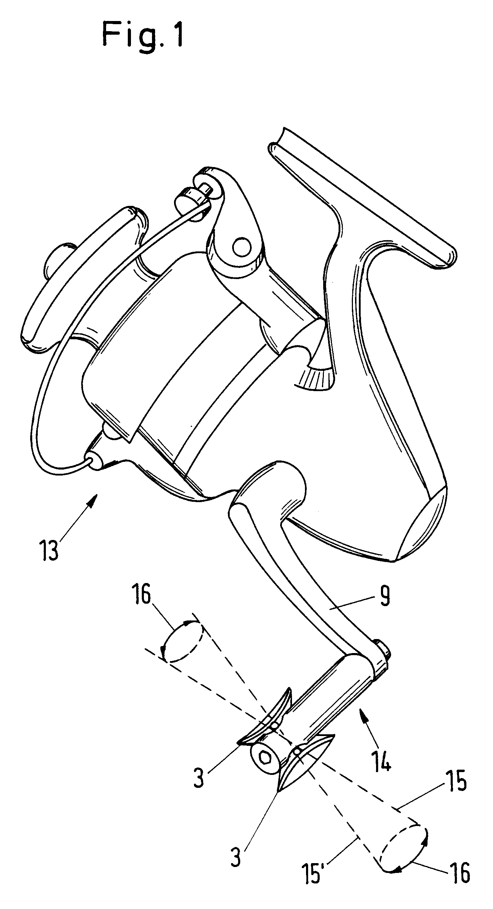

Fig. 1 zeigt eine Angelrolle 13 mit Kurbelarm 9 und Kurbelgriff 14 sowie zwei Auflagen 3 für die Finger. Wie mit den gestrichelten Linien 15, 15' und den Kreisen 16 angedeutet, können beim Drehen der Kurbel 9, 14 und Andrücken zweier Finger auf den beiden Auflagen 3 die Auflagen sich in jeder Richtung zur Seite hin bewegen, sowie sich um ihre Mittelachse C-C drehen. Im einzelnen wird dies anhand der Ausführungsbeispiele nachstehend erläutert.

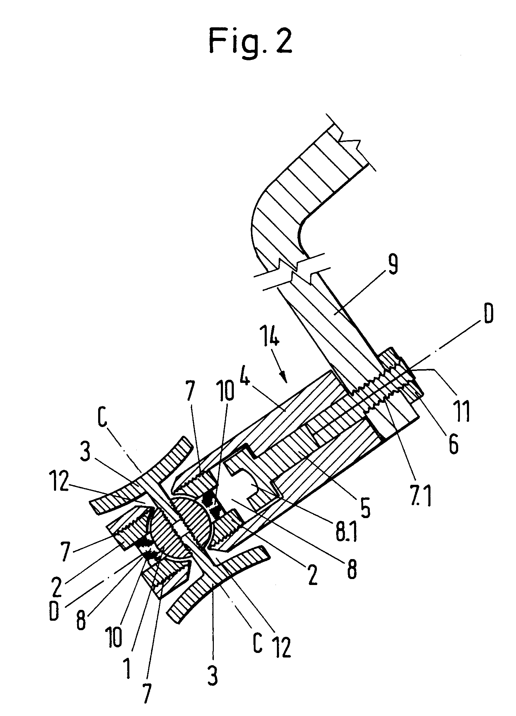

Fig. 2 zeigt wieder den Kurbelarm 9 und den allgemein mit 14 bezeichneten Kurbelgriff. Die beiden Auflagen 3 für die die Kurbelbewegung ausübenden Finger sind mit Schraubzapfen in eine Gewindebohrung der Kugel 1 eingeschraubt. Die Gewindebohrung kann durchgehend sein. Die Kugel 1 ist in einem Kugellager 2 des Griffes mit Paßsitz angeordnet und kann sich innerhalb des Kugellagers 2, welches hier aus zwei Teilen besteht, in jede Richtung bewegen. Dies können nicht nur die allseitigen Verschwenkungen gemäß den Ziffern 15, 15' und 16 der Fig. 1, sondern auch das o.g. Drehen der Auflagen 3 um deren Mittellängsachse C-C sein. Falls ein Nachpositionieren der Kugel 1 erfolgen soll, können die Kugellager Imbus-Lager 8 aufweisen und mit Außengewinden 7 in einem Zylinder 4 des Griffes 14 längsverschiebbar sein. Der Zylinder 4 ist auf einer Schraube 5 gelagert und mittels dieser am Kurbelarm 9 gehalten. Er bildet also, wie vorstehend erläutert und Fig. 2 zeigt, zum einen die Kugeldrehlagerung für die Auflagen 3 und zum anderen mittels der Schraube 5 die Befestigung am Kurbelarm 9 durch ein Gewinde 7.1 und Sicherung durch eine Kontermutter 6. Statt dessen könnte die Schraube 5 auch mit dem Kurbelarm 9 vernietet sein. Hiermit kann sich zwar der Zylinder 4 um die Längsachse D-D der Schraube 5 drehen. Er kann aber nicht sich quer zur Läntsrichtung D-D bewegen. Eine solche Bewegung ist nur in Form der Kugel-Drehlagerung der Erfindung zwischen den Auflagen 3 und den übrigen Griffteilen, insgesondere dem Zylinder 4, möglich.

Falls eine Schmierung gewünscht ist, können hierzu Ölfilze 10 dienen und gegebenenfalls Schmierkanäle 11 im Schaft der Schraube 5.

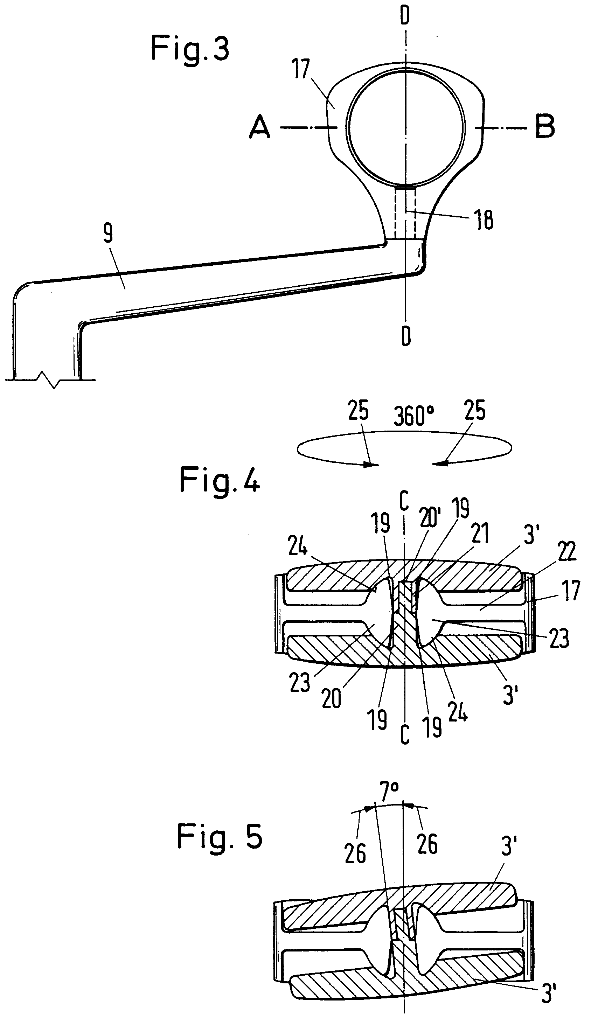

Im Ausführungsbeispiel der Fig. 3 bis 5 ist der Kurbelarm 9 mit einem Knebelrahmen 17 versehen, welcher um die Knebelachse 18 schwenkbar ist. Funktionsmäßig entspricht der Knebelrahmen 17 dem Griff 4, 14 des Ausführungsbeispieles der Fig. 1, 2. Der Knebelrahmen 17 ist somit um die Längsachse D-D der Knebelachse 18 drehbar.

Im vergrößerten Maßstab zeigen die Fig. 4, 5 Auflagen 3', die innenseitig je ein kugelförmiges Bett 19 aufweisen und dazwischen, d.h. gemäß dem Ausführungsbeispiel in der Mittelachse C-C mittels zweier Ansätze 20, 21 miteinander verbunden sind, die eine Öffnung zwischen den Köpfen 23 durchsetzen. Hierzu kann der Ansatz 20 einen im Durchmesser abgesetzten stiftförmigen Ansatz 20' aufweisen, welcher in eine Bohrung des anderen Ansatzes 21 fest eingebracht, z.B. verklemmt oder verklebt ist.

Der Knebelrahmen 17 trägt in seinem Innern über Verbindungsstreben oder eine Scheibe 22 Köpfe 23, die mit ihren kugelförmigen Flächen 24 mit Paßsitz in den Kugelbetten 19 der Auflagen 3' gleiten. Auch hier können die Auflagen 3' sich sowohl entsprechend den eingezeichneten Pfeilen 25 in einer Kreisbahn um 360° verdrehen, als zugleich auch in jeder Richtung zur Seite hin schwenken, wie es mit den Pfeilen 26 in Fig. 5 dargestellt ist. Von Vorteil ist, daß die in Fig. 4 dargestellte Kreisbewegung entsprechend dem Pfeil 25 und die in Fig. 5 dargestellte Seitenbewegung gemäß den Pfeilen 26 kombiniert durchgeführt werden kann. Hiermit ergibt sich, wie auch schon zuvor am Ausführungsbeispiel der Fig. 1, 2 erläutert, eine kugelförmige Bewegungsmöglichkeit bzw. -bahn der Auflagen 3 bzw. 3'. Entsprechend dem angestrebten Ziel der Erfindung genügt es, wenn die miteinander korrespondierenden kugelförmigen Flächen, nämlich die Außenfläche der Kugel 1 und die Innenfläche der Kugellager 2 im ersten Ausführungsbeispiel, bzw. die kugelförmigen Betten 19 der Auflagen 3' und die Außenflächen 24 der Köpfe 23 im Ausführungsbeispiel der Fig. 3 bis 5 nur den Teil einer gesamten Kugeloberfläche ausmachen. Hiermit ist eine genügende Seitenbeweglichkeit gemäß den Linien 15, 15' in Fig. 1 und den Pfeilen 26 in Fig. 5 erreicht, während eine Kreisbewegung gemäß Ziffer 16 in Fig. 1 und Ziffer 25 in Fig. 4 360°, d.h. volle Drehungen um die Mittelachsen C-C in beiden Ausführungsbeispielen gegeben ist. Somit können beim Kurbeln durch Anlegen zweier Finger mit Druck auf die Außenflächen der Auflagen 3, 3' sich diese sowohl zum Griff 4, 14 drehen, als auch demgegenüber seitlich verschwenken.

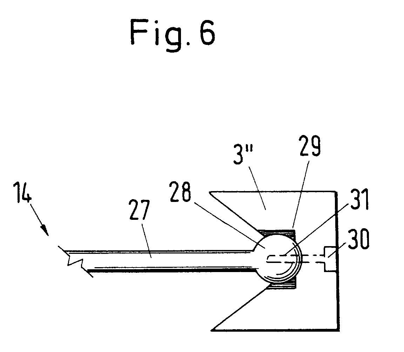

In Sonderfällen, z.B. wenn beim Hochseeangeln eine große Kraft von der gesamten Hand ausgeübt werden muß, kann es erwünscht sein, die Beweglichkeit der Auflagen zur Kurbel auszuschalten. Fig. 6 zeigt hierzu lediglich einen Griff 14 mit einem Haltearm 27, der eine Kugel 28 trägt. Die Auflageflächen werden von einem einzigen Auflageteil 3'' gebildet, das mittels einer innenseitig Kugelflächen aufweisenden Gleitbuchse 29 auf der Kugel 28 gemäß der Erfindung gleiten und sich verlagern kann. Soll diese Gleitbewegung blockiert werden, ist hierzu eine Schraube 30 vorgesehen, welche die Auflage 3'' durchsetzt und in eine Gewindebohrung 31 der Kugel 28 einschraubbar ist. Andere Blockiermittel wären auch möglich.

Die Erfindung kann sowohl ab Fabrik am Griff einer Kurbel einer Angelrolle vorgesehen sein. Auch ist es möglich, derartige Griffe für sich herzustellen und nachträglich an schon vorhandenene Angelrollen anzubringen. Die Griffteile können aus verschiedenen Materialien, z.B. Messing, sein.

Alle dargestellten und beschriebenen Merkmale, sowie ihre Kombinationen untereinander, sind erfindungswesentlich.

## Patentansprüche

1. Griff (14, 17) für eine oder an einer Kurbel (9) einer Angelrolle (13), wobei der Griff um seine eigene Längsachse drehbar am Kurbelarm angebracht oder anbringbar ist, dadurch gekennzeichnet, daß der Griff (14) Auflagen (3, 3', 3'') für die Finger aufweist, die über eine kugelförmige Lagerung mit dem Griff zu allen Seiten hin so schwenkbeweglich verbunden sind, daß dies einen Bewegungsausgleich beim Betätigen der Kurbel (9) von Hand ermöglicht.

2. Griff nach Anspruch 1, dadurch gekennzeichnet, daß die Lagerung zwischen den Auflagen (3, 3', 3'') für die Finger und dem Kurbelgriff (14; 17) aus einem kugelförmigen Teil (1; 23, 24; 28) und einem zu diesem Teil passenden, ihn teilweise umgebenden kugelförmigen Lager oder Bett (2; 19; 29) besteht.

3. Griff nach Anspruch 1 oder 2, dadurch gekennzeichnet, daß die Auflagen (3, 3') als zum Griff (14, 17) separate Bauteile um eine Achse (C-C) zum Griff (14, 17) drehbar sind, die zu den Auflageflächen der Auflagen senkrecht verläuft.

4. Griff nach einem der Ansprüche 1 bis 3, dadurch gekennzeichnet, daß die Auflagen (3) mit einer Kugel (1) fest verbunden sind, daß der Griff (14) ein Kugellager (2) aufweist und daß die Kugel (1) im Kugellager (2) gehalten und darin zu allen Seiten schwenkbeweglich positioniert ist.

5. Griff nach Anspruch 4, dadurch gekennzeichnet, daß zwei Auflagen (3) vorgesehen und jeweils mit der Kugel (1) fest verbunden sind.

6. Griff nach einem der Ansprüche 1 bis 3, dadurch gekennzeichnet, daß die Auflagen (3') ein kugelförmiges Bett (19) aufweisen und daß mit dem Griff eine Kugel oder ein kugelartiger Kopf (23) fest verbunden ist, der in dem Kugelbett (19) der Auflage (3') gehalten ist derart, daß das kugelförmige Bett zur Kugel oder zum kugelartigen Kopf zu allen Seiten schwenkbeweglich positioniert ist.

7. Griff nach Anspruch 6, dadurch gekennzeichnet, daß zwei Auflagen (3') mit ihren kugelförmigen Betten (19) zueinander hin gerichtet sind und daß sich die Kugel oder der kugelartige Kopf (23) zwischen den beiden Betten, darin passend, befindet und daß die beiden Auflagen miteinander verbunden sind.

8. Griff nach Anspruch 7, dadurch gekennzeichnet, daß die beiden Auflagen (3') ringförmig verlaufende Kugelbetten (19) und dazwischen ihrer Verbindung dienende Ansätze (20, 21) aufweisen, und daß die Kugel oder der kugelartige Kopf eine von den Ansätzen durchsetzte Bohrung aufweist und sich innerhalb eines sie tragenden Knabelrahmens (17) befinden, der den Griff (14) bildet oder mit diesem verbunden ist.

9. Griff nach einem der Ansprüche 1 bis 5, dadurch gekennzeichnet, daß der Griff (14) durch eine Schraube (5) mit dem Kurbelarm (9) verbunden ist und daß die Schraube einen Zylinder (4) des Griffes trägt, wobei der Zylinder Träger der Kugel (1) und um seine Längsachse um die Schraube (5) verdrehbar ist.

10. Griff nach einem der Ansprüche 1 bis 9, dadurch gekennzeichnet, daß die kugelförmige Lagerung zwischen der Auflage oder den Auflagen (3, 3', 3'') einerseits und einer Kugel oder kugelartigen Köpfen andererseits nur ein Teilbereich einer Kugeloberfläche darstellt.

11. Griff nach einem der Ansprüche 1 bis 10, dadurch gekennzeichnet, daß die Kugellagerung Mittel zu ihrer Nachstellung aufweist.

12. Griff nach einem der Ansprüche 1 bis 11, gekennzeichnet durch Montagebohrungen innerhalb der Kugel (1) bzw. der kugelartigen Köpfe (23) für die Anbringung und insbesondere auch feste Verbindung der Auflagen (3; 3').

13. Griff nach einem der Ansprüche 1 bis 11, gekennzeichnet durch eine in sich einstückige Auflage (3'').

14. Griff nach einem der Ansprüche 1 bis 13, dadurch gekennzeichnet, daß eine wahlweise zur Wirkung bringende Sperre (30, 31) der kugelförmigen Bewegung zwischen Auflagen einerseits und Griff andererseits vorgesehen ist.

## Claims

1. Handle (14, 17) for or on a crank (9) of a fishing reel (13), wherein the handle is mounted or mountable on the crank arm so as to be rotatable around its own longitudinal axis, characterized in that the handle (14) has supports (3, 3', 3'') for the fingers which are joined to the handle by means of a spherical bearing so as to be swivellable to all sides in such a way that this makes possible a movement equalization on operating the crank (9) by hand.

2. Handle according to claim 1, characterized in that the bearing between the supports (3, 3', 3'') for the fingers and the crank handle (14; 17) comprises a spherical part (1; 23, 24; 28) and a spherical bearing or bed (2; 19; 29) which fits said part and partially surrounds it.

3. Handle according to claim 1 or 2, characterized in that the supports (3, 3') are, as separate components from the handle (14, 17), rotatable about an axis (C-C) with respect to the handle (14, 17), which axis extends perpendicularly to the supporting surfaces of the supports.

4. Handle according to one of claims 1 to 3, characterized in that the supports (3) are joined in a fixed manner to a ball (1), in that the handle (14) has a ball bearing (2), and in that the ball (1) is held in the ball bearing (2) and is positioned therein so as to be swivellable to all sides.

5. Handle according to claim 4, characterized in that two supports (3) are provided and are each joined to the ball (1) in a fixed manner.

6. Handle according to one of claims 1 to 3, characterized in that the supports (3') have a spherical bed (19) and in that there is joined to the handle in a fixed manner a ball or a ball-like head (23) which is held in the ball bed (19) at the support (3') in such a way that the spherical bed is positioned with respect to the ball or the ball-like head so as to be swivellable to all sides.

7. Handle according to claim 6, characterized in that the spherical beds (19) of two supports (3') are directed towards one another and in that the ball or the ball-like head (23) is situated between the two beds so as to fit therein, and in that the two supports are joined to one another.

8. Handle according to claim 7, characterized in that the two supports (3') have annularly extending ball beds (19) and have projections (20, 21) serving to join them in between, and in that the ball or the ball-like head has a bore which is penetrated by the projections and is situated inside a toggle frame (17) supporting them which forms the handle (14) or is joined to the latter.

9. Handle according to one of claims 1 to 5, characterized in that the handle (14) is joined to the crank arm (9) by a screw (5) and in that the screw supports a cylinder (4) of the handle, wherein the cylinder is the support for the ball (1) and is rotatable around the screw (5) about its longitudinal axis.

10. Handle according to one of claims 1 to 9, characterized in that the spherical bearing is only a segmental region of a spherical surface between the support or the supports (3, 3', 3''), on the one hand, and a ball or ball-like heads, on the other hand.

11. Handle according to one of claims 1 to 10, characterized in that the ball bearing has means for its adjustment.

12. Handle according to one of claims 1 to 11, characterized by assembly bores inside the ball (1) or the ball-like heads (23) for mounting and, in particular, also joining the supports (3; 3') in a fixed manner.

13. Handle according to one of claims 1 to 11, characterized by an inherently single-piece support (3'').

14. Handle according to one of claims 1 to 13, characterized in that an optionally operating interlock (30, 31) is provided for the spherical movement between supports, on the one hand, and handle, on the other hand.

## Revendications

1. Poignée (14, 17) pour ou prévue sur une manivelle (9) d'un moulinet (13) de pêche à la ligne, poignée qui est disposée ou peut être disposée rotative autour de son propre axe longitudinal sur le bras de la manivelle, **caractérisée** en ce que la poignée (14) présente des appuis (3, 3', 3'') pour les doigts, qui sont reliés à la poignée par l'intermédiaire d'un palier sphérique procurant une mobilité en inclinaison vers tous les côtés, de manière à permettre ainsi une compensation de mouvement lors de la manoeuvre manuelle de la manivelle (9).

2. Poignée selon la revendication 1, caractérisée en ce que le palier entre les appuis (3, 3', 3'') pour les doigts et la poignée de manivelle (14; 17) est constitué d'une partie sphérique (1; 23, 24; 28) et d'un support ou lit sphérique (2; 19; 29) qui est complémentaire à cette partie et l'entoure partiellement.

3. Poignée selon la revendication 1 ou 2, caractérisée en ce que les appuis (3, 3') sont des pièces distinctes de la poignée (14, 17), qui sont rotatives, par rapport à la poignée (14, 17), autour d'un axe (C-C) perpendiculaire aux surfaces d'appui des appuis.

4. Poignée selon une des revendications 1 à 3, caractérisée en ce que les appuis (3) sont reliés rigidement à une sphère (1), que la poignée (14) présente un support creux sphérique (2) et que la sphère (1) est maintenue dans le support sphérique (2) et peut être positionnée dans celui-ci de façon mobile en inclinaison vers tous les côtés.

5. Poignée selon la revendication 4, caractérisée en ce que deux appuis (3) sont prévus, reliés chacun rigidement à la sphère (1).

6. Poignée selon une des revendications 1 à 3, caractérisée en ce que les appuis (3') présentent un lit sphérique (19) et qu'une sphère ou une tête sphérique (23) est reliée rigidement à la poignée, la sphère ou la tête sphérique étant maintenue dans le lit sphérique (19) de l'appui (3') de manière que ce lit puisse être positionné de façon mobile en inclinaison vers tous les côtés par rapport à la sphère ou la tête sphérique.

7. Poignée selon la revendication 6, caractérisée en ce que deux appuis (3') sont dirigés l'un vers l'autre par leurs lits sphériques (19), que la sphère ou la tête sphérique (23) est disposée entre les deux lits, en s'ajustant dans ceux-ci, et que les deux appuis sont reliés entre eux.

8. Poignée selon la revendication 7, caractérisée en ce que les deux appuis (3') présentent des lits sphériques (19) s'étendant en anneau et, entre ceux-ci, des appendices (20, 21) qui servent à leur liaison, et que la sphère ou la tête sphérique présente un perçage traversé par les appendices et se trouve à l'intérieur d'une cage (17) délimitant un bouton aplati et portant la sphère ou la tête sphérique, la cage formant la poignée (14) ou étant reliée à celle-ci.

9. Poignée selon une des revendications 1 à 5, caractérisée en ce que la poignée (14) est reliée par une vis (5) au bras (9) de la manivelle et que la vis porte un cylindre (4) de la poignée, le cylindre portant la sphère (1) et étant rotatif autour de son axe longitudinal autour de la vis (5).

10. Poignée selon une des revendications 1 à 9, caractérisée en ce que la portée sphérique entre l'appui ou les appuis (3, 3', 3'') d'une part et une sphère ou une tête sphérique d'autre part, représente seulement une partie de la surface d'une sphère.

11. Poignée selon une des revendications 1 à 10, caractérisée en ce que le palier sphérique présente des moyens pour son rajustage.

12. Poignée selon une des revendications 1 à 11, caractérisée par des perçages de montage à l'intérieur de la sphère (1) ou des têtes sphériques (23) pour la mise en place et en particulier aussi pour la liaison rigide entre les appuis (3, 3').

13. Poignée selon une des revendications 1 à 11, caractérisée par un appui (3'') en une seule pièce.

14. Poignée selon une des revendications 1 à 13, caractérisée par un blocage (30, 31), pouvant être mis en oeuvre si désiré, du mouvement sphérique entre les appuis d'une part et la poignée d'autre part.
